# EUROPEAN PATENT APPLICATION

(11) **EP 4 454 902 A1**
(43) Date of publication of application: **30.10.2024**
(21) Application number: 24170919.5
(22) Date of filing: 18.04.2024
(51) Int. Cl.: B60C 1/00, C08L 9/06

(54) **RUBBER COMPOSITION FOR A TIRE TREAD**

(30) Priority: 25.04.2023 US 202363498125 P; 19.03.2024 US 202418609757
(71) Applicant: The Goodyear Tire & Rubber Company, Akron, OH 44316 (US)
(72) Inventor: STAPP, Lisa-Maria, D-63225 Langen (Hessen) (DE); JACOBY, Claude Charles, L-6615 Wasserbillig (LU); VENET, Nicolas, F-57100 Thionville (FR)
(74) Representative: Kutsch, Bernd

(57) **Abstract**

A rubber composition is disclosed comprising: 100 phr of a blend of elastomers, said blend of elastomers comprising (i) polybutadiene, styrene-butadiene rubber and natural rubber with none of these elastomers being present in the rubber composition with more than 50 phr, or said blend of elastomers comprising (ii) more than 50 phr of polybutadiene; from 100 phr to 130 phr of silica; and 35 phr or more of a plasticizing hydrocarbon resin; wherein the rubber composition is devoid of a liquid plasticizer or comprises at most 5 phr of a liquid plasticizer. The rubber composition may be used in a tire, preferably a tread of a pneumatic tire.

## Description

### Background of the Invention

To meet performance criteria, tire tread compounds should provide a balance between three properties: rolling resistance, wet traction, and abrasion resistance (collectively the "magic triangle"). Improvement of one property often leads to a tradeoff to another. Although the properties tend to oppose each other, the goal is to expand the triangle in all directions.

Recently, a new criterion, i.e., snow traction has become also more important for tread compounds, in particular for winter tires or all season tires. Accordingly, it is desired to provide a rubber composition that has an improved balance with respect to all four of these criteria (collectively the "magic square").

### Summary of the Invention

The invention relates to a rubber composition in accordance with claim 1 and to a tire in accordance with claim 15.

Dependent claims refer to preferred embodiments of the invention.

According to a preferred aspect of the invention, the rubber composition includes vulcanizable elastomers, a preferably relatively low surface area reinforcing silica filler, a traction resin, optionally a cure package, which may include a sulfur-containing curing agent, and no or only up to 5 phr a liquid plasticizer.

According to a preferred aspect of the invention, the tire tread is formed from a rubber composition comprising a blend of elastomers comprising predominantly polybutadiene, from 100 phr to 130 phr of silica; and from 35 phr or more of a plasticizing hydrocarbon resin, wherein the rubber composition is devoid of a liquid plasticizer or includes only up to 5 phr of a liquid plasticizer (other than the hydrocarbon resin resin).

According to a preferred aspect of the invention, the rubber composition is fully devoid of soybean oil or includes only up to 5 phr of soybean oil.

According to a preferred aspect of the invention, the blend of elastomers comprises 50 phr or less of styrene-butadiene rubber, from 30 phr to up to 50 phr of polybutadiene and from 1 phr to 49 phr of natural rubber, the total amount of said elastomers in the blend of elastomers being 100 phr.

According to a preferred aspect of the invention, the blend of elastomers comprises from 35 phr to 50 phr, alternatively from 38 phr to 48 phr or from 38 phr to 42 phr of styrene-butadiene rubber, from 30 phr to up to 45 phr, alternatively from 32 phr to 42 phr or from 38 phr to 42 phr of polybutadiene, and from 10 phr to 30 phr, alternatively from 15 phr to 25 phr or from 18 phr to 22 phr, of natural rubber, the total amount of said elastomers in the blend of elastomers being 100 phr.

According to a preferred aspect of the invention, the rubber composition comprises at most 5 phr or from 3 to 5 phr of an oil, preferably a vegetable oil, as said liquid plasticizer.

According to a preferred aspect of the invention, the rubber composition comprises 38 phr to 48 phr of said plasticizing hydrocarbon resin.

According to a preferred aspect of the invention, a first rubber composition devoid of a liquid plasticizer has a dynamic storage modulus E' when measured at -50°C at 1 Hz and 0.25% sinusoidal deformation at least 20% greater than said dynamic storage modulus E' of said first rubber composition but comprising 5 phr of a liquid plasticizer.

The rubber composition in accordance with the invention leads to an improved balance within the "magic square" when used in a tread of a pneumatic tire.

### Detailed Description of Preferred Embodiments of the Invention

Aspects of the exemplary embodiment relate to a rubber composition which includes a polybutadiene, a natural rubber and a styrene-butadiene rubber with a reinforcing filler comprising (or consisting of) a relatively low surface area silica and partially or fully devoid of a liquid plasticizer.

The rubber composition is suited to use in a tire, in particular in a tire tread. Unexpectedly, the rubber composition simultaneously improves wet traction, rolling resistance, and abrasion resistance (referred in the industry as the "magic triangle"), thus meeting and/or expanding the magic triangle. At the same time, it allows to also improve snow traction and to provide a better balance within the "magic square).

The terms "rubber" and "elastomer," where used herein, may be used interchangeably, unless otherwise indicated. The terms "rubber composition" or "compounded rubber" are used interchangeably to refer to "rubber which has been blended or mixed with various ingredients and materials" and such terms are well known to those having skill in the rubber mixing or rubber compounding art.

In the description of this invention, the term "phr" refers to parts of a respective material per 100 parts by weight of rubber, or elastomer.

The terms "cure" and "vulcanize" may be used interchangeably unless otherwise indicated.

The glass transition temperature (Tg) of an elastomer is determined according to DIN 53445, "Torsion Pendulum Test, Testing of Polymer Materials" (1986), at a heating rate of 1°C per minute unless otherwise indicated.

### Elastomers

One or more sulfur vulcanizable elastomers are used in the rubber composition. These elastomers preferably include at least one double bond, e.g., a C=C bond, such as diene-based elastomers.

In one embodiment, the elastomers include a butadiene rubber (BR), a styrene-butadiene rubber (SBR), and a natural rubber (NR). The butadiene rubber may be the predominant component in the elastomers. The other elastomers, e. g., the SBR and NR, combined may be less or more than the butadiene rubber.

In a preferred embodiment, the BR, SBR and NR are the only elastomers used in the rubber composition.

By convention, the total amount of elastomer in the rubber composition is 100 phr.

### The Butadiene Rubber

The butadiene rubber is preferably a synthetic polybutadiene which is the homopolymerization product of a single monomer: butadiene.

In one embodiment, a relatively cis-1,4-polybutadiene rubber (BR or PBD) is used. Suitable polybutadiene rubbers may be prepared, for example, by organic solution polymerization of 1,3-butadiene. The BR is preferably characterized, for example, by having at least a 90 wt. % cis-1,4-microstructure content ("high cis" content), or at least 95 wt. %, or at least 96 wt. %.

A glass transition temperature (Tg) of the BR is preferably in a range of from - 95°C to -112°C.

The BR preferably has a Mooney viscosity of 45-65.

Suitable polybutadiene rubbers are available commercially such as Budene^{®} 1207, Budene^{®} 1208, Budene^{®} 1223, and Budene^{®} 1280 from The Goodyear Tire & Rubber Company.

These relatively high cis-1,4-polybutadiene rubbers can for instance be synthesized utilizing nickel catalyst systems which include a mixture of (1) an organonickel compound, (2) an organoaluminum compound, and (3) a fluorine containing compound as described in U.S. Pat. Nos. 5,698,643 and 5,451,646. For example, cis-1,4-polybutadiene rubber obtained as Budene^{®} 1207 from The Goodyear Tire & Rubber Company has a 1 ,4-content of at least 96 wt. % and a Tg of -100 °C.

The BR may be used in the rubber composition in an amount of at least 30 phr, or at least 35 phr or up to 80 phr, or up to 60 phr.

### The Styrene-Butadiene Rubber (SBR)

The SBR may be an emulsion-polymerized styrene-butadiene rubber (ESBR) and/or a solution-polymerized styrene-butadiene rubber (SSBR). Preferably, the SBR is an SSBR.

In a preferred embodiment, the styrene-butadiene rubber or SSBR has a glass transition temperature (Tg) ranging from -65°C to -55°C. In a preferred embodiment, the styrene-butadiene rubber or SSBR has a bound styrene content below 23.5%.

In a preferred embodiment, the SBR is functionalized.

Example SBRs are functionalized with at least one aminosilane group, such as the polymers disclosed in US-A-2022/0177610.

Example SSBRs are sold under the tradename SLF by The Goodyear Tire & Rubber Company. Another example SSBR that can be used includes Sprintan SLR3402 from Synthos, which is functionalized with an alkoxysilane group and a thiol group. Similarly performing functionalized SSBRs with other functional groups are also contemplated.

The SBR may be used in the rubber composition in an amount of at least 1 phr, or at least 10 phr, or at least 20 phr, or up to 49 phr, or up to 45 phr, or up to 40 phr.

### The Natural Rubber

Natural rubber (NR) is primarily cis-polyisoprene. The cis-1,4-polyisoprene content of the natural rubber is preferably at least 90 wt.%, or at least 95 wt.%. In one embodiment, the natural rubber is a natural cis-1,4-polyisoprene rubber having a cis-1,4-content of at least 96% and a Tg of about -65°C.

Several forms of natural rubber are commercially available. The natural rubber may meet the ISO TSR 20 Grade specification or the ISO TSR 10 Grade specification. An ISO TSR 20 natural rubber has a maximum ash content of 1 wt. %, as determined according to ISO 247:1990, a maximum volatile matter of 0.8 wt. %, as determined according to ISO 248:1991, a maximum nitrogen content of 0.6 wt. %, as determined according to ISO 1656:1996, a minimum initial Wallace plasticity of 30, as determined according to ISO 2007:1991, and a minimum plasticity retention index of 40, as determined according to ISO 2930:1995. For TSR 10, maximum ash of 0.75 wt. %, maximum nitrogen of 0.6 wt. %, maximum volatiles of 0.8 wt. %, minimum plasticity of 30, and minimum plasticity retention of 50.

The natural rubber may be used in the rubber composition in an amount of at least 1 phr, or at least 5 phr, or at least 10 phr, or up to 50 phr, or up to 40 phr, or up to 30 phr.

### Other Elastomers

Other vulcanizable elastomers may be present in minor amounts (e.g., totaling up to 10 wt. %, or up to 5 wt. %, or up to 2 wt. % of the elastomers), and may be selected from synthetic polyisoprene, halobutyl rubber, e.g., bromobutyl rubber and chlorobutyl rubber, nitrile rubber, liquid rubbers, polynorbornene copolymer, isoprene-isobutylene copolymer, ethylene-propylene-diene rubber, chloroprene rubber, acrylate rubber, fluorine rubber, silicone rubber, polysulfide rubber, epichlorohydrin rubber, styrene-isoprene-butadiene terpolymer, hydrated acrylonitrile butadiene rubber, isoprene-butadiene copolymer, butyl rubber, hydrogenated styrene-butadiene rubber, butadiene acrylonitrile rubber, a terpolymer formed from ethylene monomers, propylene monomers, and/or ethylene propylene diene monomer (EPDM), isoprene-based block copolymers, butadiene-based block copolymers, styrenic block copolymers, styrene-butadienestyrene block copolymer (SBS), styrene-ethylene/butylene-styrene block copolymer (SEBS), styrene-[ethylene-(ethylene/propylene)]-styrene block copolymer (SEEPS), styrene-isoprene-styrene block copolymer (SIS), random styrenic copolymers, hydrogenated styrenic block copolymers, styrene butadiene copolymers, polyisobutylene, ethylene vinyl acetate (EVA) polymers, polyolefins, amorphous polyolefins, semi-crystalline polyolefins, alpha-polyolefins, reactor-ready polyolefins, acrylates, metallocene-catalyzed polyolefin polymers and elastomers, reactor-made thermoplastic polyolefin elastomers, olefin block copolymer, co-polyester block copolymer, polyurethane block copolymer, polyamide block copolymer, thermoplastic polyolefins, thermoplastic vulcanizates, ethylene vinyl acetate copolymer, ethylene n-butyl acrylate copolymer, ethylene methyl acrylate copolymer, neoprene, acrylics, urethane, poly(acrylate), ethylene acrylic acid copolymer, polyether ether ketone, polyamide, atactic polypropylene, polyethylene including atactic polypropylene, ethylene-propylene polymers, propylene-hexene polymers, ethylene-butene polymers, ethylene octene polymers, propylene-butene polymers, propylene-octene polymers, metallocene-catalyzed polypropylene polymers, metallocene-catalyzed polyethylene polymers, ethylene-propylene-butylene terpolymers, copolymers produced from propylene, ethylene, C₄-C₁₀ alpha-olefin monomers, polypropylene polymers, maleated polyolefins, polyester copolymers, copolyester polymers, ethylene acrylic acid copolymer, and/or polyvinyl acetate, and/or wherein the polymer optionally comprises a modification and/or functionalization selected from one or more of hydroxyl-, ethoxy-, epoxy-, siloxane-, amine-, aminesiloxane-, carboxy-, phthalocyanine-, and silane-sulfide-groups, at the polymer chain ends or pendant positions within the polymer.

### Fillers

The rubber composition includes at least 130 phr or up to 180 phr, or up to 150 phr of one or more reinforcing fillers.

In one embodiment, at least one inorganic reinforcing filler is used in the rubber composition, specifically a relatively low surface area silica. In other embodiments, additional fillers may be employed.

### Silica

The term "silica" is used herein to refer to silicon dioxide, SiO₂ (which may contain minor amounts of impurities, generally less than 1 wt. %, resulting from the process in which the silica is formed). The silica may be a precipitated silica which formed by digesting amorphous silica with sodium hydroxide to form sodium silicate and precipitating silica from sodium silicate by reaction with an acidifying agent, such as sulfuric acid or carbon dioxide. The resulting precipitate is washed and filtered.

The exemplary silica is preferably a relatively low surface area silica. By this, it is meant that the silica has a CTAB specific surface area between 110 m²/g and 160 m²/g. The relatively low surface area silica may have a CTAB specific surface area of up to 180 m²/g, or up to 160 m²/g, or up to 140 m²/g. CTAB surface area is measured according to ASTM D6845-20 "Standard Test Method for Silica, Precipitated, Hydrated-CTAB (Cetyltrimethylammonium Bromide) Surface Area." This test method covers the measurement of the specific surface area of precipitated silica, exclusive of area contained in micropores too small to admit hexadecyltrimethylammonium bromide (cetyltrimethylammonium bromide, commonly referred to as CTAB) molecules.

The relatively low surface area silica preferably has a BET specific surface of at least 110 m²/g, or up to 200 m²/g. The BET specific surface is determined according to the Brunauer-Emmett-Teller method according to the standard ISO 5794-1:2022, Appendix D.

Exemplary precipitated relatively low surface area silicas are available from Evonik e.g., as Ultrasil^{™} VN2GR, which has a CTAB specific surface area of 130 m²/g; and from PPG, e.g., as Hi-Sil 210 or Hi-Sil 243 or Hi-Sil315, which have a CTAB specific surface areas of 130 m²/g.

The relatively low surface is present in the rubber composition in an amount of at least at least 130 phr, or up to 180 phr, or up to 150 phr.

In some embodiments, the relatively low surface area silica may be combined with another silica material.

In some preferred embodiments, a coupling agent, such as a silane coupling agent, may be provided to covalently bond the silica to the elastomer. Common coupling agents are sulfur-containing organosilicon compounds, such as polysulfane (alkyltrialkoxysilanes) and mercapto functionalized organosilanes. One example silica coupler, available under the tradename Si266 from Evonik, is comprised of a bis(3-triethoxysilylpropyl) polysulfide containing an average in a range of from 2 to 2.6 connecting sulfur atoms in its polysulfidic bridge. A suitable amount of silica coupler is between 0.1 and 10.0 phr.

### Carbon Black

Some embodiments may optionally also comprise carbon black, preferably 1 to 15 phr of carbon black, in addition to silica.

Exemplary carbon blacks useful herein include ASTM designations N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991, as specified by ASTM D1765-21, "Standard Classification System for Carbon Blacks Used in Rubber Products." These carbon blacks have iodine absorptions ranging from 9 to 145 g/kg and DBP number ranging from 34 to 150 cm³/100 g. For example, N220 grade is a granular carbon black with an Iodine Absorption of 116-126 g/kg, a CATB specific surface area of 106-116 m²/kg, a DBP absorption of 109-119 m²/kg, and an ash content of less than 0.5 wt. %.

### Other Fillers

Reinforcing fillers, other than the silica and carbon black, may be utilized, e.g., in amounts of up to 30 phr, or up to 20 phr, or up to 10 phr, or up to 1 phr, or may be absent. Examples of such additional reinforcing fillers include alumina, aluminum hydroxide, clay (reinforcing grades), magnesium hydroxide, boron nitride, aluminum nitride, titanium dioxide, reinforcing zinc oxide, and combinations thereof.

In some embodiments, one or more non-reinforcing fillers may be used in the rubber composition. Examples of such fillers include clay (non-reinforcing grades), graphite, magnesium dioxide, starch, boron nitride (non-reinforcing grades), silicon nitride, aluminum nitride (non-reinforcing grades), calcium silicate, silicon carbide, ground rubber, and combinations thereof. The term "non-reinforcing filler" is used to refer to a particulate material that has a nitrogen absorption specific surface area (N2SA) of 20 m²/g, or less, e.g., 10 m²/g or less. The N2SA surface area of a particulate material is determined according to ASTM D6556-21, "Standard Test Method for Carbon Black - Total and External Surface Area by Nitrogen Adsorption." In certain embodiments, non-reinforcing fillers may be a particulate material that has a particle size of greater than 1000 nm.

A total amount of non-reinforcing filler may be 0 to 10 phr, or up to 5 phr, or up to 1 phr.

### Processing aids

Processing aids may be used at a total of 30 to 100 phr, or more than 35 phr, and may include one or more of a resin, a wax, and a liquid plasticizer.

### Resins

Example resins which may be used in the rubber composition include a plasticizing hydrocarbon resin.

The plasticizing hydrocarbon resin is a hydrocarbon compound that is solid at ambient temperature (e.g., 23 °C) as opposed to a liquid plasticizing compound, such as a plasticizing oil.

The plasticizing hydrocarbon resin may be used at 35 phr to 100 phr or 35 phr to 55 phr.

Example hydrocarbon resins include aromatic, aliphatic, and cycloaliphatic resins.

In one embodiment, the hydrocarbon resin is present in the rubber composition in a total amount of at least 35 phr, or up to 75 phr, or up to 65 phr, or up to 55 phr.

The hydrocarbon resin preferably has a Tg (measured by Differential Scanning calorimetry (DSC) in accordance with ASTM D3418 (1999)) of at least 30°C and/or up to 70°C.

The hydrocarbon resin preferably has a softening point of at least 70°C and/or up to 100°C. The softening point of a hydrocarbon resin is generally related to the Tg. The Tg is generally lower than its softening point, and the lower the Tg the lower the softening point.

Examples of aliphatic resins include C5 fraction homopolymer and copolymer resins. Examples of cycloaliphatic resins include cyclopentadiene ("CPD") homopolymer or copolymer resins, dicyclopentadiene ("DCPD") homopolymer or copolymer resins, and combinations thereof.

Examples of aromatic resins include aromatic homopolymer resins and aromatic copolymer resins. An aromatic copolymer resin refers to a hydrocarbon resin which comprises a combination of one or more aromatic monomers in combination with one or more other (non-aromatic) monomers, with the majority by weight of all monomers generally being aromatic.

Specific examples of aromatic resins include coumarone-indene resins, alkylphenol resins, and vinyl aromatic homopolymer or copolymer resins. Examples of alkylphenol resins include alkylphenol-acetylene resins such as p-tert-butylphenol-acetylene resins, alkylphenol-formaldehyde resins (such as those having a low degree of polymerization). Vinyl aromatic resins may include one or more of the following monomers: alpha-methylstyrene, styrene, ortho-methylstyrene, meta-methylstyrene, para-methylstyrene, vinyltoluene, para(tert-butyl)styrene, methoxystyrene, chlorostyrene, hydroxystyrene, vinylmesitylene, divinylbenzene, vinylnaphthalene and the like. Examples of vinylaromatic copolymer resins include vinylaromatic/terpene copolymer resins (e.g., limonene/styrene copolymer resins), vinylaromatic/C5 fraction resins (e.g., C5 fraction/styrene copolymer resin), vinylaromatic/aliphatic copolymer resins (e.g., CPD/styrene copolymer resin, and DCPD/styrene copolymer resin).

Other aromatic resins include terpene resins, such as alpha-pinene resins, beta-pinene resins, limonene resins (e.g., L-limonene, D-limonene, dipentene which is a racemic mixture of L- and D-isomers), beta-phellandrene, delta-3-carene, delta-2-carene, and combinations thereof.

In one embodiment, the hydrocarbon resin includes a combination of aromatic and aliphatic/cycloaliphatic hydrocarbons, meaning that the polymeric base of the resin may be formed from aliphatic and/or aromatic monomers.

The plasticizing hydrocarbon resins useful in one embodiment of the present invention include those that are homopolymers or copolymers of cyclopentadiene (CPD) or dicyclopentadiene (DCPD), homopolymers or copolymers of terpene, homopolymers or copolymers of C₅ cut, the C₉ cut (or, more generally, from a C₈ to C₁₀ cut)), and mixtures thereof.

The hydrocarbon resin preferably has a Mw of at least 1000 g/mol and/or up to 4000 grams/mole.

Mn (number average molecular weight), Mw (weight average molecular weight) and Mz (z average molecular weight) can be suitably determined together using gel permeation chromatography (GPC) according to ASTM 5296-11 using polystyrene calibration standards (for further explanations, please see ASTM 5296-11 and/or Saviour A. Umoren and Moses M. Solomon, Polymer Characterization: Polymer Molecular Weight Distribution, March 2016, in Polymer Science, pages 412-419, in particular and sections 2 and 3.3.1).

The resin can be hydrogenated in some preferred embodiments. The resin can be modified in some embodiments.

Commercially available plasticizing resins that include C₅ cut/C₉ cut copolymer resins suitable for use in the present invention include OPPERA PR373 from ExxonMobil.

A total amount of resin in the rubber composition is preferably 35 phr or more.

### Liquid Plasticizers (including Oils and Non-Oils)

An important aspect of the present disclosure is that little to no liquid plasticizer is employed. The term liquid plasticizer in this application is used to refer to plasticizer ingredients which are liquid at room temperature (i.e., liquid at 25 °C and above). Hydrocarbon resins, in contrast to liquid plasticizers, are generally solid at room temperature.

Generally, liquid plasticizers will have a Tg that is below 0°C, generally well below, such as less than -30°C, or less than -40°C, or less than -50°C, such as a Tg of 0°C to - 100°C.

Suitable liquid plasticizers include oils (e.g., petroleum oils as well as plant-sourced oils) and non-oil liquid plasticizers, such as ether plasticizers, ester plasticizers, phosphate plasticizers, and sulfonate plasticizers. Liquid plasticizer may be added during the compounding process or later, as an extender oil (which is used to extend a rubber). Petroleum based oils may include aromatic, naphthenic, low polycyclic aromatic (PCA) oils, and mixtures thereof. Plant oils may include oils harvested from vegetables, nuts, seeds, and mixtures thereof, such as triglycerides.

In the disclosed embodiment, the rubber composition is partially devoid (i.e. 5 phr or less) or fully devoid of a liquid plasticizer, although embodiments are contemplated in which an extender oil may be used with selected polymers.

### Waxes

Wax is optionally employed in the disclosed rubber composition. Suitable waxes include paraffin waxes and microcrystalline waxes, which may be of the type described in The Vanderbilt Rubber Handbook (1978), pp. 346 and 347. Such waxes can serve as antiozonants.

The wax(es) may be present at 0.1 phr or more, such as at least 0.3 phr, or at least 0.5 phr, or up to 5 phr, or up to 2 phr, or up to 1 phr.

In addition to one or more of the above processing aids, the rubber composition may include a peptizer, such as pentachlorothiophenol, dibenzamidodiphenyl disulfide, or a mixture thereof. Typical amounts of peptizer, if used, may be 0.1 phr to 1 phr.

In one embodiment, components of the rubber composition other than the BR, SBR, natural rubber, relatively low surface area silica, and the plasticizing resin (such as other elastomers, other reinforcing fillers, non-reinforcing fillers, processing aids, antioxidants, antiozonants, antidegradants, and the cure package) are also present.

### Antioxidants and Antidegradants

Exemplary antioxidants suited to use in the rubber composition include amine-based antioxidants, such as paraphenylenediamines (PPDs), e.g., N-(1,3-dimethylbutyl)-N'-phenyl-p-phenylenediamine (6PPD), para-phenylenediamine, and others, such as those disclosed in The Vanderbilt Rubber Handbook (1978), pages 344-346. Such antioxidants may also serve as antiozonants and may be used at from 0.1 to 5 phr, such as at least 0.3 phr, or at least 1 phr, or at least 2 phr. In some embodiments, at least a portion of the antioxidant is provided in the SBR.

Antidegradants, where used, may include amine based antidegradants and phenol-containing antidegradants, and may be used at from 1 to 5 phr. Phenol-containing antidegradants include polymeric hindered phenol antioxidants, and others, such as those included in The Vanderbilt Rubber Handbook (1978), pages 344-347.

### Cure Package

The cure package includes a) a vulcanizing (cure) agent, b) optionally at least one of: a cure accelerator, a cure activator, and a cure inhibitor. The cure package may be used in the rubber composition at 0.5 to 20 phr, or at least 5 phr, or up to 10 phr.

### Vulcanizing (Cure) agent

The vulcanization of the rubber composition is conducted in the presence of a vulcanizing agent, such as a sulfur vulcanizing agent.

Examples of suitable sulfur vulcanizing agents include elemental sulfur (free sulfur), insoluble polymeric sulfur, soluble sulfur, and sulfur donating vulcanizing agents, for example, an amine disulfide, polymeric polysulfide, or sulfur olefin adduct, and mixtures thereof.

Sulfur vulcanizing agents may be used in an amount of from 0.1 to 10 phr, such as at least 0.4 phr, or up 5 phr, or up to 2 phr.

### Cure Accelerators, Cure Activators, and Inhibitors

Cure accelerators and activators act as catalysts for the vulcanization agent. Accelerators are used to control the time and/or temperature required for vulcanization and to improve the properties of the vulcanizate. In one embodiment, a single accelerator system may be used, i.e., primary accelerator. A primary accelerator may be used in amounts ranging from 0.5 to 5 phr. In another embodiment, combinations of two or more accelerators may be used. In this embodiment, a primary accelerator is generally used in the larger amount (0.5 to 3 phr), and a secondary accelerator is generally used in smaller amounts (0.05 to 0.50 phr), in order to activate and to improve the properties of the vulcanizate. Combinations of such accelerators have historically been known to produce a synergistic effect of the final properties of sulfur-cured rubbers and are often somewhat better than those produced by use of either accelerator alone. In addition, delayed action accelerators may be used which are less affected by normal processing temperatures but produce satisfactory cures at ordinary vulcanization temperatures.

Representative examples of accelerators include amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound, although a second sulfenamide accelerator may be used.

Examples of thiazole cure accelerators include 2-mercaptobenzothiazole, 2,2'-dithiobis(benzothiazole) (MBTS). Guanidine cure accelerators include diphenyl guanidine (DPG). Examples of sulfenamide cure accelerators include benzothiazole sulfenamides, such as N-cyclohexyl-2-benzothiazolesulfenamide (CBS), and N-tert-butyl-2-benzothiazole-sulfenamide (TBBS).

Cure accelerators having a vulcanization initiation time, referred to as "t0," of less than 3 minutes are referred to as ultra-accelerators. Example ultra-accelerators include 1,6-bis(N,N'-dibenzylthiocarbamoyldithio)hexane (BDBZTH), tetrabenzylthiuram disulfide (TBzTD), tetramethyl thiuram monosulfide (TMTM), tetramethyl thiuram disulfide (TMTD), tetraethyl thiuram disulfide (TETD), tetraisobutyl thiuram disulfide (TiBTD), dipentamethylene thiuram tetrasulfide (DPTT), zinc dibutyl dithiocarbamate (ZDBC), zinc diethyl dithiocarbamate, zinc dimethyl dithiocarbamate, copper dimethyl dithiocarbamate, tellurium diethyl dithiocarbamate (TDEC), zinc dibenzyl dithiocarbamate (ZBED), zinc diisononyl dithiocarbamate, zinc pentamethylene dithiocarbamate, zinc dibenzyldithiocarbamate (ZBEC), zinc isopropyl xanthate (ZIX), zinc butyl xanthate (ZBX), sodium ethyl xanthate (SEX), sodium isobutyl xanthate (SIBX), sodium isopropyl xanthate (SIPX), sodium n-butyl xanthate (SNBX), sodium amyl xanthate (SAX), potassium ethyl xanthate (PEX), potassium amyl xanthate (PAX), zinc 2-ethylhexylphosphorodithioate (ZDT/S), and mixtures thereof.

One ultra-accelerator which also provides the tire tread with improved abrasion resistance and a more stable cure is BDBZTH.

Suitably, combinations of an ultra-accelerator, such as BDBZTH, with one or more of a benzothiazole sulfenamide and a guanidine cure accelerator may be used.

The amount of the cure accelerator may be from 0.1 to 10 phr, or at least 0.5 phr, or at least 2 phr, or at least 5 phr, or up to 8 phr.

Cure activators are additives which are used to support vulcanization. Cure activators include both inorganic and organic cure activators. Zinc oxide is the most widely used inorganic cure activator and may be present at 1 phr to 10 phr, e.g., at least 2 phr, or up to 5 phr.

Organic cure activators include stearic acid, palmitic acid, lauric acid, zinc salts of each of the foregoing, and thiourea compounds, e.g., thiourea, and dihydrocarbylthioureas such as dialkylthioureas and diarylthioureas, and mixtures thereof. Specific thiourea compounds include N,N'-diphenylthiourea, trimethylthiourea, N,N'-diethylthiourea (DEU), N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, and o-tolylthiourea.

The total amount of organic cure activator(s) may be from 0.1 to 6 phr, such as at least 0.5 phr, or at least 1 phr, or up to 4 phr.

Cure inhibitors are used to control the vulcanization process and generally retard or inhibit vulcanization until the desired time and/or temperature is reached. Example cure inhibitors include cyclohexylthiophthalimide.

The amount of cure inhibitor, if used, may be 0.1 to 3 phr, or 0.5 to 2 phr.

By way of example, a rubber composition includes 100 phr of elastomers, comprising or consisting of a majority butadiene rubber in a blend further comprising or consisting of styrene-butadiene rubber and a natural rubber; at least 35 phr of a plasticizing resin; a high loading of low surface area silica; and a sulfur-containing cure package comprising a sulfur cure agent. By "majority", the disclosure means that the butadiene rubber is represented at greater levels than the other polymers in the blend.

In another embodiment, the rubber composition includes 100 phr of elastomers with no one elastomer predominantly represented. As used herein, "predominantly" means greater than 50 phr.

### Preparation of the Rubber Composition

Rubber compositions may be prepared by mixing the vulcanizable elastomers, the relatively high surface area silica and carbon black, and other rubber compounding ingredients, not including the cure agent, in at least one sequential mixing stage with at least one mechanical mixer, usually referred to as "non-productive" mixing stage, or stage(s), to an elevated temperature under high shear rubber mixing conditions, followed by a final "productive" mixing stage, in which a sulfur-based cure package, such as a sulfur-based cure agent and cure accelerators, is added to the mixture and mixed at a lower mixing temperature to avoid unnecessarily pre-curing the rubber mixture during the mixing stage. The ingredients may be mixed in the non-productive mixing stage(s) for 2 minutes to a temperature of 130 °C to 200 °C, e.g., about 145 °C. Once the cure package is added, the subsequent productive mixing step may be conducted at a temperature below the vulcanization (cure) temperature in order to avoid unwanted pre-cure of the rubber composition, e.g., no more than 120 °C, such as at least 40 °C, or at least 60 °C, e.g., for 2 minutes at a temperature of 110-115 °C. Mixing may be performed, for example, by kneading the ingredients together in a Banbury mixer or on a milled roll. The rubber composition may be cooled to a temperature below 40 °C between each of the mixing stages. For example, the rubber composition may be dumped from the mixer after each mixing step, sheeted out from an open mill, and allowed to cool to below 40 °C after each mixing step.

When the cure package is thoroughly mixed, the temperature of the mixture may be raised to effect cure. Curing of the pneumatic tire or part thereof may be carried out at a temperature of from 120 °C to 200 °C, e.g., at least 140 °C or up to 180 °C, or about 150 °C. Any of the usual vulcanization processes may be used, such as heating in a press or mold, or heating with superheated steam or hot air. Such tires can be built, shaped, molded and cured by various methods which are known and will be readily apparent to those having skill in the art.

The use of silica fillers may optionally necessitate a separate re-mill stage for separate addition of a portion or all of such filler. This stage often is performed at temperatures similar to, although often slightly lower than, those employed in the productive mixing stages, e.g., ramping from 90 °C to 150 °C.

In one embodiment, a tire is provided, the tire having a tread formed, at least in part, from the exemplary rubber composition. Other parts of the tire, such as the tire sidewalls, may additionally, or alternatively, be formed, at least in part from a rubber composition as described herein. The tire may be a pneumatic tire for an on-the-road vehicle, such as an automobile or truck, or a tire for an off-road vehicle, airplane or the like.

The rubber composition is not limited to use in treads but may find application in other tire components as well.

### Example Compositions

Table 1 illustrates exemplary rubber compositions in accordance with aspects of the exemplary embodiment:

**TABLE 1**

| Embodiment (phr) | | |
|---|---|---|
| Styrene-Butadiene elastomer | relatively low Tg, functionalized | ≤50 |
| Synthetic Polybutadiene | relatively high cis | ≥ 30 but ≤50 |
| Natural rubber | | 1 to 49 |
| Traction Resin | | ≥35 |
| Silica | | 100 to 130 |
| Liquid plasticizer | | zero or optionally |
| | | up to 5 phr |

The use of the rubber composition in tires, such as treads, may result in a tire having improved or desired tread properties. These improved or desirable properties may include rolling resistance, stiffness (snow indicator), chip and flake, and treadwear.

Without intending to limit the scope of the exemplary embodiment, the following example illustrates preparation of the exemplary rubber compositions and properties thereof.

### EXAMPLE 1

In this example, the effect that a system fully devoid of liquid plasticizer has on the performance of a tread compound is illustrated. Rubber compositions were mixed in a multistep mixing procedure following the recipes in Table 2. Standard amounts of curatives were also included. Rubber compounds were then tested in the lab for wet, rolling resistance (RR), snow and treadwear indicators, with the results given in Table 3.

A reference rubber composition was prepared as Sample A with a majority content SSBR in a three-polymer blend and oil. Reference A is used to show the impact of a relatively low Tg polymer matrix with a relatively high Tg plasticizer. Inventive B and C are experimental rubber samples. For the experimental rubber samples, the oil is omitted and only the resin is used as a plasticizing system in combination with a low surface area silica. Also, the levels of the polymers in the blend are adjusted to include a majority polybutadiene content, with all other ingredients essentially being the same.

For Inventive sample C, the compound of Inventive B is modified by adjustments to the silica and coupler levels, resin level and polymer ratio to confirm the direction of performance indicators. All other ingredients remain the same.

The basic formulations are shown in the following Table 2, which is presented in parts per 100 parts by weight of elastomer (phr).

**TABLE 2**

| | Samples | | |
|---|---|---|---|
| | Reference A | Inventive B | Inventive C |
| SSBR¹ | 65 | 46.5 | 40 |
| Polybutadiene² | 15 | 33.5 | 40 |
| Natural rubber | 20 | 20 | 20 |
| Traction Resin³ | 32.5 | 40 | 46 |
| Silica⁴ | 125 | 110 | 117 |
| Coupler | 7.8 | 6.8 | 7.3 |
| Oil | 10.5 | 0 | 0 |

| | | | |
|---|---|---|---|
| ¹ 10% Styrene, functionalized, Tg -59°C, available from Goodyear ² Tg -106°C, available as BUDENE^{®} 1223 from Goodyear ³ Aromatic (C9) modified aliphatic (C5) petroleum hydrocarbon resin ⁴ BET Nitrogen Surface Area 130.0 according to QA 5070-1 | | | |

The results are shown in Table 3. To demonstrate the improved performance, the values of Reference A are normalized to a value of 100 and the values for Inventive samples B and C are compared to the normalized values of 100 for Reference A in Table 4.

**TABLE 3**

| | Samples | | |
|---|---|---|---|
| | Reference A | Inventive B | Inventive C |
| **Rolling Resistance** | | | |
| Tan Delta (10%)^{1A} | 0.197 | 0.174 | 0.179 |
| Rebound resilience 100°C [%]^{1B} | 49 | 53 | 54 |
| **Chip & Flake** | | | |
| True Tensile² | 70 | 88 | 85 |
| **Snow** | | | |
| E' [MPa] at -50°C³ | 992 | 644 | 681 |
| **Wet Traction** | | | |
| Rebound resilience 0°C [%]^{1B} | 17 | 17 | 16 |
| **Treadwear** | | | |
| Relative volume loss [mm³]⁴ | 131 | 102 | 110 |

| | | | |
|---|---|---|---|
| ^{1A} RPA 505: rotary drum abrasion test according to DIN 53516 ^{1B} Rebound measured on a Zwick Roell 5109 rebound resilience tester according to DIN 53512 at the given temperature ² Rings 23°C ³ Eplexor: The modulus E' was determined by means of a GABO ^{™} Explexor^{™} tester. The test specimen was subjected to 0.25% sinusoidal deformation at 1 Hz and the temperature was -50°C ⁴ DIN abrasion rotary drum abrasion test according to DIN 53516 (smaller value means less abrasion) | | | |

**TABLE 4**

| | Samples | | |
|---|---|---|---|
| | Reference A | Inventive B | Inventive C |
| **Rolling Resistance** | | | |
| Tan Delta (10%) (lower better) | 100 | 88 | 91 |
| Rebound 100°C (higher is better) | 100 | 108 | 110 |
| **Chip & Flake** | | | |
| True Tensile Ring (higher better) | 100 | 125 | 121 |
| **Snow** | | | |
| E' [MPa] at -50°C (lower is better) | 100 | 65 | 69 |
| **Wet Traction** | | | |
| Rebound 0°C (lower is better) | 100 | 100 | 94 |
| **Treadwear** | | | |
| DIN Abrasion (lower is better) | 100 | 78 | 85 |

As can be seen in Tables 3 and 4, the overall performance properties of the Inventive samples B and C (devoid of liquid plasticizer) improve chip & flake, snow performance, rolling resistance, and treadwear while maintaining wet traction.

The new combination provides a clear advantage over conventional compounds that employ liquid plasticizer in a relatively low Tg polymer matrix.

It is contemplated that the disclosed compound can be incorporated into a tread of a winter or all season tire for use on a variety of vehicles including passenger and truck, such as light truck (SUV) and medium-radial truck (MRT).

### EXAMPLE II

In this example, the effect that a system partially devoid of liquid plasticizer has on the performance of a tread compound is illustrated. Rubber compositions were mixed in a multistep mixing procedure following the recipes in Table 5. Standard amounts of curatives were also included. Rubber compounds were then tested in the lab for wet, rolling resistance (RR), snow and treadwear indicators, with the results given in Table 6.

Inventive Samples D and E are partially devoid of the oil in Reference A. Sample D was prepared as Sample C with a reduction of the oil content in Reference A. For Inventive sample E, the compound of Inventive D is modified by adjustments to the resin level. All other ingredients remain the same.

The basic formulations are shown in the following Table 5, which is presented in parts per 100 parts by weight of elastomer (phr).

**TABLE 5**

| | Samples | | |
|---|---|---|---|
| | Inventive C' | Inventive D | Inventive E |
| SSBR¹ | 40 | 40 | 40 |
| Polybutadiene² | 40 | 40 | 40 |
| Natural rubber | 20 | 20 | 20 |
| Traction Resin³ | 46 | 46 | 42 |
| Silica⁴ | 117 | 117 | 117 |
| Coupler | 7.3 | 7.3 | 7.3 |
| Sunflower Oil | 0 | 4 | 4 |

| | | | |
|---|---|---|---|
| ¹ 10% Styrene, functionalized, Tg -59°C, available from Goodyear ² Tg -106°C, available as BUDENE^{®} 1223 from Goodyear ³ Aromatic (C9) modified aliphatic (C5) petroleum hydrocarbon resin ⁴ BET Nitrogen Surface Area 130.0 according to QA 5070-1 | | | |

The results are shown in Table 6.

**TABLE 6**

| | Samples | | |
|---|---|---|---|
| | C' | Inventive D | Inventive E |
| **Rolling Resistance (higher is better)** | | | |
| Rebound resilience 100°C [%]^{1B} | 53 | 59 | 58 |
| **Snow (lower is better)** | | | |
| E' [MPa] at -50°C³ | 718 | 577 | 515 |
| **Wet Traction (lower is better)** | | | |
| Rebound resilience 0°C [%]^{1B} | 16 | 17 | 19 |
| **Treadwear (lower is better)** | | | |
| Relative volume loss [mm³]⁴ | 114 | 97 | 96 |
| | Samples | | |
| | C' | Inventive D | Inventive E |

| | | | |
|---|---|---|---|
| ^{1B} Rebound measured on a Zwick Roell 5109 rebound resilience tester according to DIN 53512 at the given temperature ³ Eplexor: The modulus E' was determined by means of a GABO ^{™} Explexor^{™} tester. The test specimen was subjected to 0.25% sinusoidal deformation at 1 Hz and the temperature was -50°C ⁴ DIN abrasion rotary drum abrasion test according to DIN 53516 (smaller value means less abrasion) | | | |

To demonstrate the improved performance, the values of C' are normalized to a value of 100 and the values for Inventive samples B and C are compared to the normalized values of 100 for Inventive C' in Table 7.

**TABLE 7**

| | Samples | | |
|---|---|---|---|
| | C' | Inventive D | Inventive E |
| **Rolling Resistance (higher is better)** | | | |
| Rebound resilience 100°C [%]^{1B} | 100 | 111 | 109 |
| **Snow (lower is better)** | | | |
| E' [M Pa] at -50°C³ | 100 | 80 | 72 |
| **Wet Traction (lower is better)** | | | |
| Rebound resilience 0°C [%]^{1B} | 100 | 106 | 119 |
| **Treadwear (lower is better)** | | | |
| Relative volume loss [mm³]⁴ | 100 | 85 | 84 |

| | | | |
|---|---|---|---|
| ^{1B} Rebound measured on a Zwick Roell 5109 rebound resilience tester according to DIN 53512 at the given temperature ³ Eplexor: The modulus E' was determined by means of a GABO ^{™} Explexor^{™} tester. The test specimen was subjected to 0.25% sinusoidal deformation at 1 Hz and the temperature was -50°C ⁴ DIN abrasion rotary drum abrasion test according to DIN 53516 (smaller value means less abrasion) | | | |

As can be seen in Tables 6 and 7, the overall performance properties of the Inventive samples D and E (partially devoid of liquid plasticizer) improve snow performance, rolling resistance, and treadwear with Sample D further maintaining wet traction.

The new combination provides a clear advantage over conventional compounds that employ liquid plasticizer in a low Tg polymer matrix.

It is contemplated that the disclosed compound can be incorporated into a tread of a winter or all-season tire for use on a variety of vehicles including passenger and truck, such as light truck (SUV) and medium-radial truck (MRT).

## Claims

1. A rubber composition comprising:
100 phr of a blend of elastomers, said blend of elastomers comprising (i) polybutadiene, styrene-butadiene rubber and natural rubber with none of these elastomers being present in the rubber composition with more than 50 phr, or said blend of elastomers comprising (ii) more than 50 phr of polybutadiene;
from 100 phr to 130 phr of silica; and
35 phr or more of a plasticizing hydrocarbon resin;
wherein the rubber composition is devoid of a liquid plasticizer or comprises at most 5 phr of a liquid plasticizer.

2. The rubber composition of claim 1 wherein the blend of elastomers comprises 50 phr or less of styrene-butadiene rubber, from 30 phr to up to 50 phr of polybutadiene and from 1 phr to 49 phr of natural rubber, the total amount of said elastomers in the blend of elastomers being 100 phr.

3. The rubber composition of claim 1 or 2 wherein the blend of elastomers comprises from 35 phr to 50 phr, alternatively from 38 phr to 48 phr or from 38 phr to 42 phr of styrene-butadiene rubber, from 30 phr to up to 45 phr, alternatively from 32 phr to 42 phr or from 38 phr to 42 phr of polybutadiene, and from 10 phr to 30 phr, alternatively from 15 phr to 25 phr or from 18 phr to 22 phr, of natural rubber, the total amount of said elastomers in the blend of elastomers being 100 phr.

4. The rubber composition of at least one of the previous claims wherein the rubber composition comprises at most 5 phr or from 3 to 5 phr of an oil, preferably a vegetable oil, as said liquid plasticizer.

5. The rubber composition of at least one of the previous claims wherein the rubber composition comprises 38 phr to 48 phr of said plasticizing hydrocarbon resin.

6. The rubber composition of at least one of the previous claims wherein a first rubber composition devoid of a liquid plasticizer has a dynamic storage modulus E' when measured at -50°C at 1 Hz and 0.25% sinusoidal deformation at least 20% greater than said dynamic storage modulus E' of said first rubber composition but comprising 5 phr of a liquid plasticizer.

7. The rubber composition of at least one of the previous claims wherein the styrene-butadiene rubber is a solution polymerized styrene-butadiene rubber and/or has a glass transition temperature (Tg) in a range of from -65°C to -55°C.

8. The rubber composition of at least one of the previous claims wherein the styrene-butadiene rubber is functionalized with at least an aminosilane group; and/or wherein at least one elastomer in the blend is functionalized.

9. The rubber composition of at least one of the previous claims wherein the silica has a CTAB specific surface area in a range of from 110 m²/g to 160 m²/g.

10. The rubber composition of at least one of the previous claims wherein the hydrocarbon resin is present in an amount of not more than 55 phr.

11. The rubber composition of at least one of the previous claims wherein the hydrocarbon resin has a glass transition temperature (Tg) in a range of from 30°C to 70°C.

12. The rubber composition of at least one of the previous claims wherein the hydrocarbon resin is selected from a group consisting of C5 fraction homopolymer resin, a C5 fraction copolymer resin, a vinyl aromatic copolymer resin and combinations thereof; and/or wherein the hydrocarbon resin contains a mixture of homopolymers or copolymers of the C₅ cut and the C₉ cut or is an aromatic C9 modified aliphatic C5 petroleum hydrocarbon resin.

13. The rubber composition of at least one of the previous claims wherein the polybutadiene has one or more or all of the following features:
(i) the polybutadiene is not functionalized;
(ii) the polybutadiene has a Tg in a range of from -95°C to -112°C;
(iii) the polybutadiene has at least 90 percent or at least 95 percent cis-content.

14. The rubber composition of at least one of the previous claims wherein the styrene-butadiene rubber has a styrene content of up to 23.5%.

15. A tire, preferably a tread of a pneumatic tire, comprising the rubber composition of at least one of the previous claims.
